# EUROPÄISCHE PATENTSCHRIFT

(11) **EP 0 526 685 B1**
(45) Veröffentlichungstag und Bekanntmachung des Hinweises auf die Patenterteilung: **01.10.1997**
(21) Anmeldenummer: 92101204.3
(22) Anmeldetag: 25.01.1992
(51) Int. Cl.: F27D 3/15, F27B 14/06, B22D 41/46, H05B 6/24, C21B 7/14, F27D 23/02

(54) **Verfahren zum teilkontinuierlichen Schmelzen keramischen Materials in Induktionsschmelzöfen mit Sinterkrustentiegel, ein hierfür geeigneter Ofen und Vorrichtung zum periodischen Schmelzanstich**
Process of semi-continuous smelting of ceramic materials by induction furnaces with skull melting crucible, a furnace therefor and apparatus for periodical tapping
Procédé de fusion de matériaux céramiques semi-continue dans fours à chauffage par induction avec un creuset froid et four adapté et dispositif pour le perçage périodique

(30) Priorität: 01.03.1991 DE 4106537
(43) Veröffentlichungstag der Anmeldung: 10.02.1993
(73) Patentinhaber: DEGUSSA AG, 60311 Frankfurt (DE)
(72) Erfinder: Binder, Dieter, Dr., W-8755 Alzenau 2 (DE); Kleinschmitt, Peter, Dr., W-6450 Hanau 9 (DE); Birtigh, Gerhard, W-6369 Nidderau 2 (DE); Zetzmann, Klaus, Dr., W-8752 Kleinostheim (DE)

(56) Entgegenhaltungen:
- EP-A- 0 119 877
- EP-A- 0 169 765
- EP-A- 0 327 833
- EP-A- 0 445 090
- DE-A- 2 630 232
- FR-A- 1 234 072
- FR-A- 1 430 192
- US-A- 2 785 214

## Beschreibung

Die Erfindung betrifft ein Verfahren zum teilkontinuierlichen Schmelzen keramischer Materialien in Hochfrequenz- und Mittelfrequenz-Induktionsschmelzöfen mit Sinterkrustentiegel, wobei Schmelze durch periodischen Schmelzanstich entnommen wird. Weitere Gegenstände richten sich auf einen hierfür geeigneten Ofen und eine Vorrichtung zur Durchführung des periodischen Schmelzanstichs. Diese Vorrichtung umfaßt ein Werkzeug mit einer beweglichen Anstichlanze zum Beseitigen erstarrter Schmelze in der Auslaufrinne des Ofens und Durchstich der Sinterkruste.

Induktionsschmelzöfen sind in unterschiedlichen Ausführungen bekannt, und die anwendbaren Frequenzen reichen von etwa 50 Hz bis in den MHz-Bereich. Die Ausgestaltung des Ofens und Tiegels zur Aufnahme der Schmelze sowie die Vorrichtungen zur Entnahme der Schmelze richten sich maßgeblich nach den thermischen und elektrischen Eigenschaften des Schmelzguts. Um keramische Materialien mit Schmelzpunkten oberhalb 1000 °C, insbesondere zwischen 2000 °C und 3000 °C, zu schmelzen und Verunreinigungen der Schmelze durch das Tiegelmaterial zu vermeiden, hat sich die sogenannte Skull- oder Sinterkrusten-Technik als geeignet erwiesen, wobei das zu schmelzende Material an der kalten Wand einer Tiegelform einen Sinterkrustentiegel bildet - vgl. W. Aßmus, Chemie Ingenieur Technik 55, (1983) (9), Seiten 716-717 und V.J. Alexanderov, Current Topics in Materials Science Vol. 1, (1978), Seiten 421-480.

Die in den genannten Dokumenten beschriebene Technik und die verwendeten Tiegel gestatten keine teilkontinuierliche Herstellung eines hochschmelzenden Materials mit externer Weiterverarbeitung der Schmelze. Diese Technik weist darüber hinaus weitere Nachteile auf, indem sie wegen der jeweiligen Neubefüllung des Tiegels, Sinterkrustenbildung und Abkühlung zeitraubend und arbeitsintensiv ist. Ferner können Qualitätsschwankungen von Ansatz zu Ansatz nicht ausgeschlossen werden.

Der Hochfrequenz-Induktionsschmelzofen der FR-PS 1 430 192 gestattet das Erreichen von Temperaturen bis 3000 ^{o}C und verfügt über einen Sinterkrustentiegel. Der Tiegel gemäß Figur 2 dieses Dokuments umfaßt eine Tülle zum Ausgießen der Schmelze. Hiermit kann der gesamte Inhalt des Tiegels durch Kippen entleert werden, sofern eine ggf. auf der Oberfläche des Tiegels gebildete Sinterkruste durchstoßen wird. Eine Anregung für einen teilkontinuierlichen Betrieb durch Entnahme eines Teils der Schmelze in periodischen Abständen und Ergänzung der entnommenen Schmelzmenge durch periodisch oder kontinuierlich eingebrachtes zu schmelzendes Material und eine geeignete Vorrichtung hierfür lassen sich diesem Dokument nicht entnehmen. Eine vollständige Entleerung des Tiegels ist nachteilig, weil das dann erforderliche vollständige Neubefüllen des Tiegels mit dem zu schmelzenden dielektrischen, pulverförmigen Material sowie dem für die anfängliche Energieabsorption erforderlichen Metall aufwendig ist und eine niedrige Raum-Zeit-Ausbeute nach sich zieht. Zudem führt die Weiterverarbeitung des gesamten geschmolzenen Tiegelinhalts wegen der abzuführenden Energiemenge zu Problemen, wenn der Tiegelinhalt groß ist; schließlich lassen sich auch hier größere Qualitätsschwankungen der einzelnen Tiegelchargen kaum vermeiden.

Aus der EP-A 0 079 266 ist ein weiterer Induktionsschmelzofen mit einem Sinterkrustentiegel bekannt. Dieser Ofen mit mehreren Windungen wird mit einer Frequenz von vorzugsweise 10 kHz bis 50 kHz betrieben und verfügt über eine Vorrichtung zur Entnahme der Schmelze am Boden des Ofens. Diese Vorrichtung umfaßt ein Ablaßrohr, das durch den Boden reicht und mit einem vom eigentlichen Ofen unabhängigen Induktor umgeben ist. Das Ablaßrohr besteht aus einem die gewählte Frequenz absorbierenden Material und kann mittels eines Stopfens aus dem gleichen Material verschlossen werden. Diese Ablaßvorrichtung, welche mit dem Boden des Tiegels keine leitende Verbindung eingehen darf, muß während des eigentlichen Schmelzprozesses mittels einer geeigneten Kühlvorrichtung gekühlt werden. Die technische Ausführung einer solchen Vorrichtung ist damit sehr aufwendig. Zudem lassen sich Verunreinigungen des geschmolzenen Materials durch jenes des Ablaßrohrs nicht hinreichend ausschließen, insbesondere dann nicht, wenn Schmelze periodisch oder gar kontinuierlich abgelassen werden soll. Dieser Ofen eignet sich zum Schmelzen solcher keramischer Stoffe, deren sogenannte Kopplungs- und Schmelztemperatur eng beieinander liegen. Demgegenüber kann es bei Stoffen mit weit auseinanderliegender Kopplungs- und Schmelztemperatur zu Kurzschlüssen und damit Schädigungen des Induktors und Generators kommen. Der genannte Ofen ist somit nur eingeschränkt verwendbar, etwa für das Schmelzen von Glas und Email, nicht aber für sehr hochschmelzende Stoffe, wie z. B. Titandioxid oder Zirkoniumsilikat.

Aus der EP-B 0 119 877 ist ein Hochfrequenzinduktionsschmelzofen, dessen Wand gleichzeitig den Induktor und die kalte Wandseite eines Sinterkrustentiegels bildet. Der Induktor besteht aus einer einzigen flachen Windung mit mehreren Umläufen. Gemäß einer Ausführungsform weist der Ofen ein seitlich durch die Spule tretendes, ggf. gekühltes Rohr auf, das der Abnahme der Schmelze dienen soll. Bei Stoffen mit hohem Schmelzpunkt, insbesondere aber im Falle von Stoffen wie Zirkonsand, bei welchen beim Abkühlen eine Volumenzunahme, etwa durch Modifikationswandel, auftritt, verstopft ein solches Rohr; ein Aufheizen des Rohres läßt sich aber nicht bewerkstelligen bzw. führt zu einem erheblichen technischen Aufwand und/oder Materialproblemen.

Eine gleichzeitige Zufuhr von zu schmelzendem Material und Abnahme der Schmelze in einem Ofen der vorgenannten Art (EP-B 0 119 877) erwies sich, wie die Anmelderin der vorliegenden Erfindung feststellte, bei hochschmelzenden Materialien, wie Zirkonsand, als nicht handhabbar, weil entweder das Niveau zu rasch absackt und ungeschmolzenes Material von der Schmelze mitgerissen wird oder bei geringem Abfluß die Schmelze im Auslaufrohr erstarrt. Ein Öffnen des Auslaufrohrs erwies sich als äußerst problematisch. Der hohe Widerstand der erstarrten Schmelze in dem Auslaufrohr erschwerte oder verhinderte ein Öffnen durch Klopfen mit Meißel und Hammer; auch ein Aufbohren des erstarrten Materials bereitete wegen der Härte und Sprödigkeit der untersuchten Materialien Schwierigkeiten; im Falle eines nur teilweisen Öffnens des Rohres kommt es zu einem raschen Wiederverschließen durch Krustenbildung. Hinzu kommt, daß ein manuelles Arbeiten im Bereich einer hoch- bis mittelfrequenten Streustrahlung nicht zulässig und auch nach Abschaltung des Schwingkreises durch die heiße Schmelze gefahrenträchtig ist.

In der EP-A 0 248 727 wird ein gattungsgemäßer Induktionsschmelzofen beschrieben, der als Induktor nur eine einzige flache Windung mit einem Umlauf aufweist. Für den Hochfrequenzbereich werden übliche Röhrengeneratoren, für den Mittelfrequenzbereich Halbleitergeneratoren verwendet. Gemäß einer Ausführungsform des Ofens ist dieser mit einem Bodenablaßrohr mit einem Stopfen von unten versehen. Diese Vorrichtung erlaubt nur ein vollständiges Entleeren des Tiegelinhalts mit den bereits vorerwähnten Nachteilen.

Ein vollständiges oder ggf. teilweises Entleeren eines Induktionsschmelzofens durch Kippen des Ofen mittels einer Kippvorrichtung und Ausgießen der Schmelze über eine Ausgießlippe ist aus der US-PS 2,785,214 bekannt. Das Ausgießen ist aber nur möglich, sofern sich über der Schmelze keine Wärmeabstrahlungskruste aus dem zu schmelzenden Material gebildet hat. Eine solche Kruste ist aber aus energetischer Sicht wünschenswert.

Die DE-Offenlegungsschrift 26 30 232 lehrt eine automatische Abstichmaschine für den Abstich bei elektrischen Hochöfen und Öfen für die Herstellung von Legierungen oder dergleichen. Die Maschine umfaßt einen beweglichen Wagen mit einem darauf angeordneten Rahmen und einer Abstichlanze, Vorrichtungen zum Anheben und Absenken sowie zum Verstellen der Neigung der Abstichlanze sowie zum Aktivieren des Vortriebs derselben.

Aufgabe der Erfindung ist somit, ein Verfahren aufzuzeigen, das einen teilkontinuierlichen Schmelzbetrieb nach der Sinterkrusten-Technik in Induktionsschmelzöfen mit einem Sinterkrustentiegel ermöglicht. Das Verfahren sollte eine periodische Entnahme einer definierten Menge Schmelze aus dem Tiegel erlauben und nicht die Nachteile des aus der EP-A 0 119 877 vorbekannten Verfahrens aufweisen. Weitere Aufgaben bestehen darin, einen für den periodischen Schmelzanstich geeigneten Induktionsschmelzofen mit einer automatisch steuerbaren Vorrichtung zum periodischen Schmelzanstich desselben zu schaffen.

Gefunden wurde ein Verfahren zum teilkontinuierlichen Schmelzen keramischen Materials durch induktives Schmelzen desselben im Hoch- und Mittelfrequenzbereich in Induktionsschmelzöfen, deren Wand als Schmelzspule (Induktor) ausgebildet ist und einen Sinterkrustentiegel umhüllt, Ablassen der Schmelze durch eine in der Schmelzspule angeordnete Auslaufvorrichtung und Befüllen des Ofens mit einer der abgelassenen Menge Schmelze entsprechenden Menge des zu schmelzenden Materials, das dadurch gekennzeichnet ist, daß man als Auslaufvorrichtung eine am oberen Rand der Schmelzspule angeordnete offene und intensiv gekühlte Auslaufrinne verwendet, in periodischen Abständen den Auslauf der Schmelze durch Schmelzanstich mittels einer eine Anstichlanze umfassenden Anstichvorrichtung öffnet, indem die Anstichlanze zunächst unter die Schmelznase des aus dem vorangegangenen Schmelzanstich in der Auslaufrinne verbliebenen Rests an erstarrter Schmelze geführt, dann mit dieser angehoben und anschließend zwischen der angehobenen erstarrten Schmelze und dem Boden der Rinne bis zum Durchstich durch die Sinterkruste vorangetrieben wird, und die Auslaufmenge nach Bedarf durch Kippen des Ofens mittels einer Kippvorrichtung reguliert.

Gefunden wurde ferner ein Hochfrequenz- und Mittelfrequenz-Induktionsschmelzofen mit Sinterkrustentiegel mit einer Vorrichtung zum periodischen Schmelzanstich, wobei der Ofen eine Schmelzspule (1) mit den Anschlüssen für die Masse und Phase, Vorrichtungen zum Kühlen (2) der Schmelzspule, eine Gußform (5) zur Aufnahme eines kühlbaren Spulenbodens (5a) und eine Vorrichtung zum periodischen Ablassen eines Teils der Schmelze umfaßt, der dadurch gekennzeichnet ist, daß die Vorrichtung zum Ablassen der Schmelze eine am oberen Rand der Schmelzspule angeordnete offene Rinne (6) ist, welche mit einer Kühlvorrichtung (6/1), einem Eingang (6/2) und Ausgang (6/3) für das Kühlmedium und einer Haltevorrichtung (6/4) zur Fixierung der Rinne an der Schmelzspule ausgestattet ist, und daß die Vorrichtung zum periodischen Schmelzanstich mindestens eine Hubvorrichtung (16, 21) zur Veränderung der Neigung oder zur vertikalen Parallelverschiebung des eine Anstichlanze (20) tragenden Vortriebsgestänges (19) und mindestens eine Stellvorrichtung (14, 15) zum Vortreiben des Vortriebsgestänges aufweist, wobei die Hub- und Stellvorrichtungen programmiert steuerbar ausgeführt sind.

Das erfindungsgemäße Verfahren sowie der anspruchsgemäße, eine kühlbare Auslaufrinne umfassende Ofen mit einer Vorrichtung zum periodischen Schmelzanstich eignen sich zum Schmelzen keramischer Materialien, welche unter den Betriebsbedingungen einen Sinterkrustentiegel ausbilden. Übliche Betriebstemperaturen liegen im allgemeinen oberhalb 1000 °C, insbesondere im Bereich von 1500 bis 3000 °C. Der Begriff Schmelzen schließt chemische Reaktionen im Schmelzzustand mit ein.

Unter "teilkontinuierlich" wird verstanden, daß in periodischen Abständen jeweils etwa 1 bis 70 % der Schmelze, insbesondere 5 bis 30 % des Tiegelinhalts, aus dem Tiegel abgelassen werden und nach jedem Ablassen wieder die entsprechende Menge des zu schmelzenden Materials zugeführt und aufgeschmolzen wird. Die je Anstich ausfließende Menge Schmelze ist von der Geometrie und dem Füllgrad des Tiegels, von der Form und Position der Auslaufrinne und vom Neigungswinkel des Tiegels abhängig. Der Neigungswinkel der Schmelzspule ist über eine Kippvorrichtung zwischen 0 und 90 °C frei wählbar, wobei während des periodischen Anstichs die Spule meist nur im Bereich zwischen 0 und 30 °C gekippt wird.

Das Verfahren, der Induktionsofen zur Durchführung desselben und die Vorrichtung zum periodischen Schmelzanstich werden anhand nachfolgender Zeichnungen erläutert:

Figur 1 zeigt einen Schnitt durch den erfindungsgemäßen Induktionsschmelzofen mit Sinterkrustentiegel und Auslaufrinne nebst der Vorrichtung zum periodischen Schmelzanstich, sowie Vorrichtungen zum Dosieren des zu erschmelzenden Materials, zum Abkühlen der Schmelze außerhalb des Ofens und Vorrichtungen zum Heben bzw. Senken und Kippen des Ofens. Die Kondensatoren des Schwingkreises sowie der Generator und die elektrischen Einrichtungen zur Energieversorgung und Steuerung des Prozesses sind in Figur 1 nicht gezeigt.

Figur 2 zeigt die offene, kühlbare Auslaufrinne.

Figur 3 umfaßt die Ausgangsposition sowie drei Arbeitspositionen einer Vorrichtung zum periodischen Schmelzanstich mit der Auslaufrinne.

Der prinzipielle Aufbau einer Induktionsschmelzanlage umfaßt einen vorzugsweise selbstgesteuerten Schwingkreis eines aperiodischen Generators. Der Schwingkreis wird von der Schmelzspule des Induktionsofens und Kondensatoren gebildet. Die erforderliche Frequenz wird im Hochfrequenzbereich (größer 10 kHz bis 500 kHz) mittels Röhrengeneratoren, im Mittelfrequenzbereich (um und kleiner 10 kHz bis etwa 500 Hz) mittels Halbleitergeneratoren erzeugt werden.

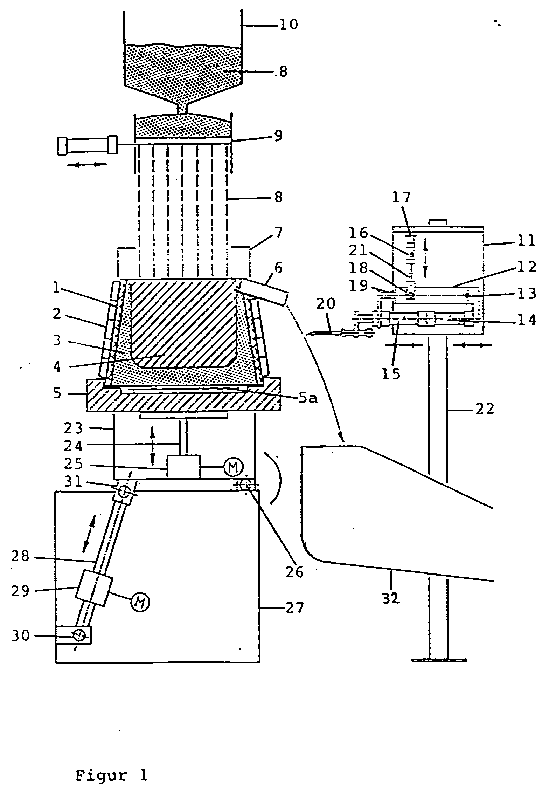

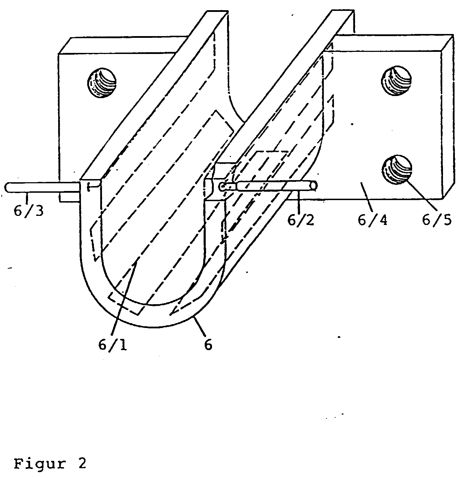

In Figur 1 ist eine bevorzugte Ausführungsform eines Induktionschmelzofens dargestellt. Hierin bedeuten 1 eine Schmelzspule, welche von einer Kühlvorrichtung 2 - z. B. auf die Spule aufgeschweißte Halbrohre oder ein Doppelmantel, wie in Fig. 1 angedeutet - umgeben ist und den die Schmelze 4 aufnehmenden Sinterkrustentiegel 3 aus dem zu schmelzenden Material umhüllt. Die Schmelzspule ruht auf einer Gußform 5, welche auch den gekühlten und von der Spule isolierten Spulenboden 5a aufnimmt. Die offene Auslaufrinne 6 ist so im Bereich des oberen Randes der Spule fixiert (mittels einer in Fig. 2 gezeigten Haltevorrichtung 6/4 und Bohrungen 6/5 für Befestigungselemente), daß der Rinnenboden vor dem Schmelzanstich unterhalb des Niveaus der Schmelze liegt und der obere Rand der Rinne im wesentlichen mit dem Rand der Schmelzspule abschließt. Der Querschnitt der Rinne sowie deren Neigung beeinflussen die Auslaufmenge an Schmelze; eine geringe Neigung der Rinne und geringe Höhendifferenz zwischen dem Rinnenboden am ofenseitigen Ende und dem Niveau der Schmelze im Tiegel können wegen des langsamen Flusses zu einem raschen Erstarren der Schmelze in der Rinne und Bildung einer neuen Sinterkruste am ofenseitigen Ende der Rinne führen.

Die Schmelzspule kann ein- oder mehrwindig sein; einwindige Spulen aus Kupfer oder Aluminium werden bevorzugt. Um das Entfernen des Schmelzregulus nach Beendigung des Schmelzens mit periodischen Schmelzanstichen und Abkühlen zu erleichtern, ist es zweckmäßig, einen Spulenkörper in leicht konischer Form (gemäß Fig. 1) einzusetzen, wenn sich das Schmelzgut während des Abkühlens, etwa durch Modifikationsumwandlungen ausdehnt.

Die Beschickung des Schmelztiegels erfolgt aus dem Vorratsbehälter 10, aus welchem das zu schmelzende Material einer Vorrichtung 9 zum flächigen Dosieren des Materials 8 zugeführt wird. Zur Minimierung von Wärmeverlusten können Wärmeschutzschilde 7 um den oberen Rand des Ofens angeordnet sein; zusätzlich ist es zweckmäßig, die Tiegeloberfläche mit dem zu schmelzenden Material bedeckt zu halten.

Mittels einer Vorrichtung 23 zum Heben und Senken des Spulenbodens - beispielsweise umfaßt sie in Figur 1 einen Hubzylinder 24 und ein Antriebsaggregat 25 - läßt sich der erstarrte Regulus leicht aus der Spule entfernen. Mittels der Kippvorrichtung 27, welche in unterschiedlicher Form ausgebildet sein kann - in Figur 1 bedeuten 28 eine Hubstange, 29 ein Antriebsaggregat, 30 und 31 Angriffspunkte der Hubvorrichtung und 26 den Drehpunkt des Ofens - läßt sich die Ausflußmenge an Schmelze durch Kippen des Ofens regulieren.

Die Vorrichtung 32 dient der Abkühlung der periodisch über die Rinne 6 auslaufenden Schmelze.

In der in Fig. 1 dargestellten bevorzugten Ausführungsform der Schmelzanstichvorrichtung ist die Hubvorrichtung als ein am Befestigungspunkt 17 einer Halterung 11 auslenkbar fixierter pneumatischer Zylinder 16 ausgebildet. Die Hubstange 21 greift den das Vortriebsgestänge 19 aufnehmenden Haltebügel 12, der am Befestigungspunkt 13 drehbar an der Halterung 11 befestigt ist, am Drehpunkt 18 an; durch Betätigen des Hubzylinders wird der Neigungswinkel der Anstichlanze 20 in vertikaler Richtung verändert und kann somit dem Neigungswinkel der Auslaufrinne 6 angepaßt werden. Die Stellvorrichtung zum Vortreiben der Anstichlanze bzw. des sie tragenden Gestänges 19 wird von zwei pneumatischen Zylindern 14 und 15, welche am Haltebügel 12 befestigt sind und das Vortriebsgestänge aufnehmen, gebildet. Anstelle von pneumatischen Zylindern können auch andere Mittel mit gleicher Funktion, d. h. Heben/Senken und Vortreiben/Zurückfahren, etwa Spindeln zum Einsatz kommen. Eine alternative Hubvorrichtung besteht beispielsweise darin, daß die Halterung 11, welche in diesem Falle die Anstichlanze und Vorrichtungen zum Vortreiben enthält, am Stativ 22 mittels einer Antriebsvorrichtung angehoben und abgesenkt oder gedreht wird. Gemäß einer bevorzugten Ausführungsform ist die Anstichlanze (20) als Bohrmeißel ausgeführt, der bei Widerstand eine getaktete Vorwärtsbewegung, ähnlich einem Bohrhammer mit oder ohne Drehbewegung, ausführt.

In Figur 2 ist eine bevorzugte Ausführungsform der nach oben offenen kühlbaren Rinne dargestellt. Der Mantel der Rinne enthält eine maximale Zahl Bohrungen 6/1 parallel zur Längsrichtung der Rinne (in Fig. 2 gestrichelt dargestellt), welche mäanderartig miteinander verbunden sind und von einem Kühlmedium, das durch Leitung 6/2 zu und durch Leitung 6/3 abgeführt wird, durchflossen werden. Die Halterung 6/4, welche mittels Befestigungselementen (6/5 stellt eine Bohrung hierfür dar) an der Schmelzspule fixiert wird, dient der Positionierung der Rinne. Eine möglichst intensive Kühlung der Rinne wird bevorzugt, weil unter dieser Voraussetzung im Schmelzbetrieb außer einer leicht entfernbaren Schmelznase keine Anbackungen auftreten.

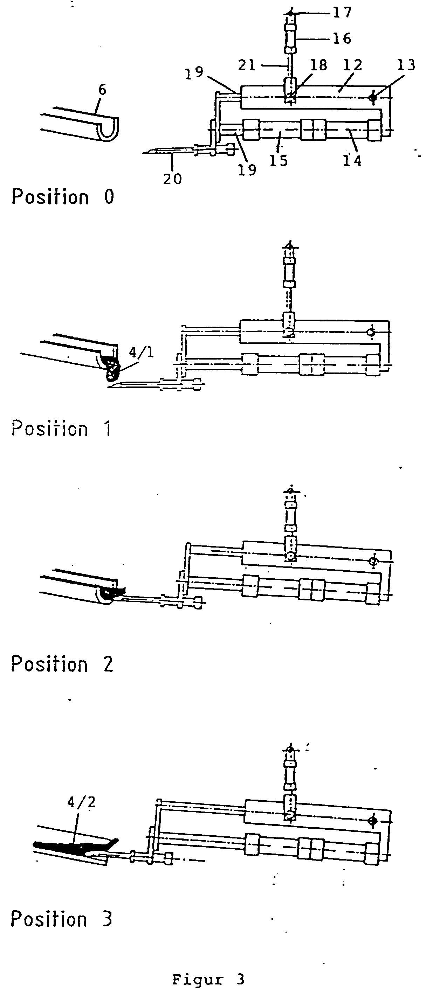

In Figur 3 sind die Ausgangsposition und drei Arbeitspositionen des Anstichwerkzeugs zusammen mit der Rinne, welche in der Position 1 bis 3 auch erstarrte Schmelze 4/2 enthält, dargestellt. Die Anstichlanze wird durch programmiert gesteuertes Aktivieren des Zylinders 14 und damit Vortrieb des Gestänges 19 zunächst unter die Schmelznase 4/1 gebracht (Position 1); im zweiten Schritt wird der Hubzylinder 16 aktiviert, wodurch die Anstichlanze nach oben geneigt und dabei die Schmelznase angehoben wird (Position 2); schließlich wird der Zylinder 15 aktiviert und die Lanze unter der erstarrten Schmelze am Boden der Rinne vorgetrieben (Position 3), wodurch die erstarrte Schmelze vollends abgehoben und die Sinterkruste am ofenseitigen Ende der Rinne einfach durchstoßen wird.

Im Falle einer besonders dicken Sinterkruste kann es zweckmäßig sein, zusätzlich zum Anstich mittels der erfindungsgemäßen Vorrichtung die Sinterkruste mittels einer zweiten Anstichlanze im Bereich des Übergangs von der Spulenwand zur Rinne anzustechen.

Während des Ablaufens der Schmelze kann der Tiegel weiter mit Rohmaterial beaufschlagt werden, wenn eine nachträgliche Trennung des geschmolzenen und nichtgeschmolzenen, aber beim Ablauf mitgerissenen Materials keine Probleme bereitet.

Es war nicht vorhersehbar, daß die erfindungsgemäße Führung der Anstichlanze mittels der hierfür konzipierten Vorrichtung einen völlig problemlosen und mit geringem Energieaufwand durchführbaren Schmelzanstich erlaubt. Überraschend war ferner, daß mit zunehmender Intensität der Kühlung der Auslaufrinne die in der Rinne erstarrte Schmelze leichter entfernbar ist und zudem die Menge abnimmt. Als wesentliche Vorteile des erfindungsgemäßen Verfahrens und der Vorrichtungen zur Durchführung desselben ergeben sich:
Problemloser Schmelzanstich, wodurch ein störungsfreier teilkontinuierlicher Betrieb ermöglicht wird. Sichere Handhabung der Schmelztechnik auch im Betriebsmaßstab, und damit
Verwendbarkeit von Mittelfrequenz-Induktionsschmelzöfen mit einwindigen Schmelzspulen mit größerem Durchmesser und entsprechend großem Tiegelinhalt.
Gleichförmige Qualität der Schmelzprodukte durch teilkontinuierlichen Betrieb anstelle des Batchbetriebs, der bei sehr hochschmelzenden Materialien bisher als kaum vermeidbar angesehen wurde.
Steigerung der Raum-Zeit-Ausbeute, weil wiederkehrend zeitraubende Maßnahmen zum Neubefüllen des Tiegels, Abkühlen und Entnahme des Schmelzregulus nur in größeren Zeitabständen erforderlich werden.
Erhöhung der Arbeitssicherheit der an der Schmelzanlage tätigen Personen durch die Einsatzmöglichkeit der automatisch gesteuerten Anstichvorrichtung.

### Beispiele

In einer Induktionsschmelzanlage gemäß Figur 1 und unter Verwendung von Schmelzspulen unterschiedlicher Geometrie, an welchen jeweils eine Auslaufrinne gemäß Figur 2 am oberen Spulenrand fixiert war, und der abgebildeten Vorrichtung zum periodischen Schmelzanstich wurde Zirkonsand bei ca. 2700 ^{o}C geschmolzen. Der periodische Schmelzanstich erfolgte gemäß Figur 3. Die Schmelze wurde in einer Quenchrinne mit Druckluft- und Wasserdüsen abgeschreckt, wodurch ein Zirkonoxid-Kieselsäure-Gemisch in Form von Granalien erhalten wird.

Zu Beginn der Versuche wurde der Schmelztiegel zu ca. 90 % mit Zirkonsand gefüllt. Um unterhalb der Kopplungstemperatur des Zirkonsandes das Hochfrequenzfeld zu absorbieren und den Zirkonsand durch thermischen Kontakt zu erwärmen, wurden in den Zirkonsand horizontal liegende Molybdän-Plättchen eingebettet. Nachdem der Tiegelinhalt bis auf eine Sinterkruste durchgeschmolzen war, wurde Zirkonsand nachdosiert und mit dem teilkontinuierlichen Betrieb begonnen. Die Vesuchsparameter und Ergebnisse folgen aus der Tabelle.

| Beispiel | 1 | 2 | 3 | 4 | 5 | 6 |
|---|---|---|---|---|---|---|
| Schmelzspule: | | | | | | |
| Durchmesser (cm) | 25 | 40 | 40 | 40 | 60 | 90 |
| Höhe (cm) | 25 | 25 | 25 | 25 | 30 | 45 |
| Zahl Windungen | 2 | 2 | 1 | 1 | 1 | 1 |
| Arbeitsfrequenz (kHz) (Beispiele 1 bis 5 Röhrengenerator) (Beispiel 6 Halbleitergenerator) | 150 | 120 | 250 | 250 | 30 | 10 |
| Auslaufrinne: | | | | | | |
| Durchmesser (mm) | 16 | 16 | 16 | 16 | 16 | 22 |
| Kühlwasser (l/h) | 400 | 400 | 400 | 400 | 400 | 700 |
| Durchsatz (kg ZrSiO₄/h) | 16 | 20 | 29 | 33 | 52 | 180 |
| Zahl der Anstiche pro h | 4-6 | 4-5 | 2-3 | 1 | 3 | 3 |
| Betriebsdauer (h) | 40 | 40 | 100 | 20 | 8 | 8 |

Die Schmelzanstiche verliefen problemlos, weil mittels der Anstichvorrichtung die in der Rinne erstarrte Schmelze des vorhergegangenen Anstichs zusammen mit der Schmelznase abgehoben werden konnte und damit der Weg für den Durchstich der Sinterkruste frei war. Eine nennenswerte Reduzierung des Kühlwasservolumenstroms durch die Kühleinrichtung der Rinne führte umgehend zu schwerentfernbaren Krusten, wodurch der Betrieb der Anlage erheblich, gestört wurde.

## Patentansprüche

1. Verfahren zum teilkontinuierlichen Schmelzen keramischen Materials durch induktives Schmelzen desselben im Hoch- und Mittelfrequenzbereich in Induktionsschmelzöfen, deren Wand als Schmelzspule (Induktor) ausgebildet ist und einen Sinterkrustentiegel umhüllt,
Ablassen der Schmelze durch eine in der Schmelzspule angeordnete Auslaufvorrichtung und Befüllen des Ofens mit einer der abgelassenen Menge Schmelze entsprechenden Menge des zu schmelzenden Materials,
dadurch gekennzeichnet,
daß man als Auslaufvorrichtung eine am oberen Rand der Schmelzspule angeordnete offene und intensiv gekühlte Auslaufrinne verwendet, in periodischen Abständen den Auslauf der Schmelze durch Schmelzanstich mittels einer eine Anstichlanze umfassenden Anstichvorrichtung öffnet, indem die Anstichlanze zunächst unter die Schmelznase des aus dem vorangegangenen Schmelzanstich in der Auslaufrinne verbliebenen Rests an erstarrter Schmelze geführt, dann mit dieser angehoben und anschließend zwischen der angehobenen erstarrten Schmelze und dem Boden der Rinne bis zum Durchstich durch die Sinterkruste vorangetrieben wird, und die Auslaufmenge nach Bedarf durch Kippen des Ofens mittels einer Kippvorrichtung reguliert.

2. Hochfrequenz- und Mittelfrequenz-Induktionsschmelzofen mit Sinterkrustentiegel mit einer Vorrichtung zum periodischen Schmelzanstich, wobei der Ofen eine Schmelzspule (1) mit den Anschlüssen für die Masse und Phase, Vorrichtungen zum Kühlen (2) der Schmelzspule, eine Gußform (5) zur Aufnahme eines kühlbaren Spulenbodens (5a) und eine Vorrichtung zum periodischen Ablassen eines Teils der Schmelze umfaßt,
dadurch gekennzeichnet,
daß die Vorrichtung zum Ablassen der Schmelze eine am oberen Rand der Schmelzspule angeordnete offene Rinne (6) ist, welche mit einer Kühlvorrichtung (6/1), einem Eingang (6/2) und Ausgang (6/3) für das Kühlmedium und einer Haltevorrichtung (6/4) zur Fixierung der Rinne an der Schmelzspule ausgestattet ist, und daß die Vorrichtung zum periodischen Schmelzanstich mindestens eine Hubvorrichtung (16, 21) zur Veränderung der Neigung oder zur vertikalen Parallelverschiebung des eine Anstichlanze (20) tragenden Vortriebsgestänges (19) und mindestens eine Stellvorrichtung (14, 15) zum Vortreiben des Vortriebsgestänges aufweist, wobei die Hub- und Stellvorrichtungen programmiert steuerbar ausgeführt sind.

3. Induktionsschmelzofen nach Anspruch 2,
dadurch gekennzeichnet,
daß die Hubvorrichtung als ein an einem Befestigungspunkt (17) einer Halterung (11) fixierter pneumatischer Zylinder (16) ausgebildet ist und die zugehörige Hubstange (21) den das Vortriebsgestänge (19) aufnehmenden Haltebügel (12), der an einem weiteren Befestigungspunkt (13) drehbar an der Halterung (11) befestigt ist, an einem am Haltebügel (12) angeordneten Drehpunkt (18) angreift und die Stellvorrichtung in Form von zwei pneumatischen Zylindern (14, 15), welche am Haltebügel (12) befestigt sind und das Vortriebsgestänge aufnehmen, ausgebildet ist.

## Claims

1. Process for the semi-continuous melting of ceramic material by inductive melting of the latter in the high-frequency and medium-frequency range in induction melting furnaces whose wall is formed as a melting coil (inductor) and encloses a sinter crust crucible, discharging the melt through a discharge device arranged in the melting coil and refilling the furnace with an amount of material to be melted corresponding to the discharged amount of melt, characterised in that an open and intensively cooled discharge channel arranged on the upper edge of the melting coil is used as discharge device, the discharge of the melt is initiated at periodic intervals by tapping the melt by means of a tapping device comprising a tapping lance, wherein the said tapping lance is first of all guided underneath the melt nose of the residue of solidified melt remaining in the discharge channel from the preceding melt tapping and, with the solidified melt having been raised, is then advanced between the raised solidified melt and the floor of the channel until it pierces the sinter crust, and the discharge amount is regulated as necessary by tipping the furnace by means of a tipping device.

2. High-frequency and medium-frequency induction melting furnace with a sinter crust crucible with a device for periodic tapping of the melt, the furnace comprising a melting coil (1) with mass and phase connections, devices (2) for cooling the melting coil, a casting mould (5) for accommodating a coolable coil floor (5a), and a device for periodic discharge of part of the melt, characterised in that the device for discharging the melt is an open channel (6) arranged on the upper edge of the melting coil, which channel is provided with a cooling device (6/1), an inlet (6/2) and outlet (6/3) for the cooling medium, and a holding device (6/4) for securing the channel on the melting coil, and that the device for periodic tapping of the melt has at least one lifting device (16, 21) for altering the inclination of or for the vertical parallel displacement of the advancing rod (19) carrying a tapping lance (20) and at least one servo unit (14, 15) for operating the advancing rod, the said lifting device and servo unit being controllably programmed.

3. Induction melting furnace according to claim 2, characterised in that the lifting device is in the form of a pneumatic cylinder (16) fixed on a securement point (17) of a holder (11) and the associated lifting rod (21) engages the holding frame (12) accommodating the driving rod (19), at a pivot point (18) arranged on the holding frame (12), the latter being rotatably secured to the holder (11) at a further securement point (13), and the servo unit is in the form of two pneumatic cylinders (14, 15) that are secured on the holding frame (12) and that accommodate the driving rod.

## Revendications

1. Procédé de fusion semi-continu de matériau céramique par fusion inductive de celui-ci dans le domaine de la haute et moyenne fréquence dans des fours de fusion à induction, dont la paroi est réalisée comme bobine de fusion (inducteur) et entoure un creuset en croûte de frittage, par évacuation du produit fondu à travers un dispositif de sortie disposé dans la bobine de fusion et remplissage du four avec une quantité du matériau à fondre correspondant à la quantité de produit fondu retirée,
caractérisé en ce qu'
on utilise comme dispositif de sortie une goulotte de sortie placée sur le bord supérieur de la bobine de fusion, ouverte et refroidie de manière intensive, on ouvre à des intervalles périodiques la sortie du produit fondu par perçage au moyen d'un dispositif de perçage comportant une lance de perçage, en guidant d'abord la lance de perçage sous le bec de produit fondu du résidu de produit de fusion solidifié restant dans la goulotte de coulée du perçage de coulée précédente, puis en soulevant celle-ci et ensuite en avançant entre le produit de fusion durci soulevé et le fond de la goulotte jusqu'à la percée à travers la croûte de frittage, et en régulant la quantité à extraire selon le besoin par basculement du four au moyen d'un dispositif de renversement.

2. Four de fusion à induction à haute et moyenne fréquence avec un creuset en croûte de frittage et avec un dispositif pour le perçage de coulée périodique, tandis que le four comporte une bobine de fusion (1) avec les raccordements pour la masse et la phase, des dispositifs de refroidissement (2) de la bobine de fusion, un moule (5) pour recevoir un fond de bobine (5a) qu'on peut refroidir et un dispositif pour le retrait périodique d'une partie du produit fondu,
caractérisé en ce que
le dispositif de vidage du produit fondu est une goulotte (6) ouverte placée sur le bord supérieur de la bobine de fusion, qui est équipée d'un dispositif refroidisseur (6/1), d'une entrée (6/2) de sortie (6/3) pour le milieu refroidisseur et d'un dispositif d'amarrage (6/4) pour fixer la goulotte sur la bobine de fusion, et en ce que le dispositif pour le perçage de coulée périodique comprend au moins un dispositif de levage (16, 21) pour modifier l'inclinaison ou pour le déplacement parallèle vertical de la tringlerie d'avancement (19) portant une lance de perçage (20) et comporte au moins un dispositif de réglage (14, 15) pour l'avancement de la tringlerie d'avancement, les dispositifs de levage et de réglage étant réalisés pour pouvoir être commandés par programme.

3. Four à induction selon la revendication 2,
caractérisé en ce que
le dispositif de levage est réalisé sous forme d'un vérin pneumatique (16) fixé à un point de fixation (17) d'un support (11) et la barre de levage (21) qui en fait partie est appliquée à l'étrier de retenue (12) recevant la tringlerie d'avancement (19), en un point de rotation (18) placé sur l'étrier (12) qui lui est fixé sur le support (11) mobile en rotation sur un autre point de fixation (13) et le dispositif de réglage est réalisé sous la forme de deux vérins pneumatiques (14, 15) qui sont fixés à l'étrier de retenue (12) et reçoivent la tringlerie d'avancement.
